# EUROPÄISCHE PATENTSCHRIFT

(11) **EP 0 662 535 B1**
(45) Veröffentlichungstag und Bekanntmachung des Hinweises auf die Patenterteilung: **10.03.1999**
(21) Anmeldenummer: 94120926.4
(22) Anmeldetag: 30.12.1994
(51) Int. Cl.: D01H 11/00

(54) **Lufttechnische Einrichtung für eine Maschine**
Ventilation apparatus for a machine
Appareil de ventilation pour une machine

(30) Priorität: 11.01.1994 DE 4400506
(43) Veröffentlichungstag der Anmeldung: 12.07.1995
(73) Patentinhaber: LTG LUFTTECHNISCHE GMBH, 70435 Stuttgart (DE)
(72) Erfinder: Günther, Klaus, D-71229 Leonberg (DE)
(74) Vertreter: Grosse, Rainer, Dipl.-Ing.

(56) Entgegenhaltungen:
- EP-A- 0 408 376
- DE-A- 1 510 510
- DE-A- 3 843 608
- DE-A- 3 925 101
- GB-A- 529 151
- GB-A- 982 604
- US-A- 3 412 545

## Beschreibung

Die Erfindung betrifft eine lufttechnische Einrichtung für eine Maschine mit mindestens einem drehenden Teil, insbesondere für eine Textilmaschine, nach dem Oberbegriff des Anspruchs 1. Ferner betrifft die Erfindung eine Textilmaschine gemäß dem Oberbegriff des Anspruchs 17.

Maschinen mit mindestens einem drehenden Teil sind bekannt. Betrachtet man beispielsweise die vorstehend erwähnten Textilmaschinen, so weisen diese eine Vielzahl von drehenden Teilen, nämlich deren Spindeln auf. Derartige Maschinen bewirken im Betrieb eine nicht unerhebliche Luftbewegung. Ferner kann es -je nach dem mit der Maschine verarbeiteten Material- zu einer Verschlechterung der Luftqualität kommen.

Aus der DE 1 510 510 A1 ist eine lufttechnische Einrichtung für eine Zwirnmaschine bekannt, die Mittel zum Sammeln und Abführen des Faserflugs aufweist. Diese Mittel bestehen zum einen in einem offenen Sammelring und zum anderen in Abdeckungen, die luftdichte Wandungen bilden. Die Wandungen können aus schallschluckendem Material bestehen. Die sich aufgrund von drehenden Teilen bildende Luftbewegung wird durch die bekannten Abdeckungen reflektiert, so daß zwar eine gewisse Abschirmwirkung erzielt wird, jedoch durch die Reflektion die Energie der Luftbewegung nahezu unbeeinträchtigt bleibt.

Der Erfindung liegt die Aufgabe zugrunde, die Wirkung der von drehenden Teilen ausgehenden Luftbewegung erheblich zu verringern.

Diese Aufgabe wird erfindungsgemäß dadurch gelöst, daß das Trennelement als Luftfilter ausgebildet ist. Durch die erfindungsgemäße Maßnahme wird einerseits die durch das drehende Teil verursachte Luftbewegung im außerhalb der Maschine liegenden Bereich reduziert, das heißt, das Trennelement besitzt eine Drosselwirkung, so daß beispielsweise im Falle einer Textilmaschine ein von dessen Spindeln ausgehender Spindelwind erheblich reduziert wird. Andererseits wirkt das Trennelement als Luftfilter, das heißt, es besitzt gegenüber der Luftbewegung eine Teildurchlässigkeit, so daß sich im Luftstrom befindliche Partikel, beispielsweise im Falle der Texilmaschine durch die Verarbeitung abgelöste Fasern, ausgefiltert werden. Befindet sich die Maschine beispielsweise in einem Raum, dem eine Klimaanlage oder eine sonstige lufttechnische Anlage zugeordnet ist, so führt die erwähnte Drosselwirkung des erfindungsgemäßen Trennelements dazu, daß die von der lufttechnischen Anlage des Raumes bewirkte Luftströmung nicht unzulässig stark von der durch die drehenden Teile verursachten Luftbewegung beeinflußt wird. Das Trennelement filtert also die von den drehenden Teilen abgelösten Materialpartikal aus der von den drehenden Teilen erzeugten Luftströmung und übt auf die Luftströmung die Drosselwirkung aus. Insbesondere, wenn die Textilmaschinen als Ringspindelmaschinen ausgebildet sind, ergeben sich die Vorteile des erfindungsgemäßen Luftfilters daraus, daß bei größeren Maschinen der obigen Art bis zu tausend Spindeln nebeneinander angeordnet sein können. Diese Spindeln drehen sich mit Drehzahlen zwischen 12.000 und 20.000 Umdrehungen pro Minute, so daß bei entsprechenden Spindeldurchmessern Umfangsgeschwindigkeiten von bis zu 37 m pro Sekunde auftreten. Diese Spindeln erzeugen demzufolge eine Drallströmung. Dieses Phänomen wird -wie vorstehend ausgeführtSpindelwind genannt. Messungen haben ergeben, daß die Strömungsgeschwindigkeit des Spindelwindes in Spindelnähe bis zu 2,5 m pro Sekunde beträgt. Im Abstand von 0,5 m von den Spindeln hat der Spindelwind zumeist noch eine Geschwindigkeit von 0,5 m pro Sekunde. Hierdurch ergeben sich insbesondere im Gangbereich zwischen den Maschinen sehr hohe Luftströmungsgeschwindigkeiten. Problematisch ist ein derartiger Spindelwind insbesondere deshalb, weil die meisten Spinnereien Klimaanlagen aufweisen, die eine Luftströmung von maximal 0,5 m pro Sekunde im Gangbereich zwischen den Maschinen erzeugen. Daher kann die durch die Klimaanlage gewünschte Luftströmung unzulässig durch den Spindelwind beeinflußt werden. Darüber hinaus schleudern die schnell drehenden Spindeln aufgrund ihrer hohen Umfangsgeschwindigkeit Staub und Fasermaterial in den Gangbereich zwischen den Maschinen. Die dadurch bewirkte übermäßige Luftbelastung kann von der Klimaanlage aus vorstehenden Gründen nicht befriedigend bewältigt werden, weil die erforderliche, von der Klimaanlage verlangte gleichmäßige Raumdurchspülung durch den Spindelwind behindert wird. Das erfindungsgemäße Trennelement verursacht somit nicht nur eine Verringerung der Luftströmung im Gangbereich zwischen den Maschinen, so daß eine gegebenenfalls vorhandene Klimaanlage ordnungsgemäß arbeiten kann, sondern nimmt zudem eine Reinigung der Luft vor.

Einfach aufgebaut und preisgünstig herstellbar ist das erfindungsgemäße Trennelement, wenn es als stationäre Trennwand ausgebildet ist. Alternativ kann das Trennelement auch als Filterband ausgebildet sein, das von einer vorzugsweise an dem einen Ende der Maschine angeordneten Vorratsrolle abwickelbar und auf eine vorzugsweise an dem anderen Ende der Maschine angeordneten Aufnahmerolle aufwickelbar ist. Sofern das hierbei eingesetzte Filterband nur einmal verwendet wird, kann es aus einfachem und preisgünstigem Material bestehen. Üblicherweise wird das Filterband aber hin und her bewegt, d.h. es wird von der Vorratsrolle abgewickelt und auf der Aufnahmerolle aufgewickelt, dann wird der Bewegungssinn umgekehrt und die vorige Vorratsrolle wird jetzt zur Aufnahmerolle. Hierdurch ist eine Mehrfachverwendung möglich.

In einer Ausgestaltung der Erfindung wird das Filterband als schlaufenförmiges in sich geschlossenes Filterband ausgebildet, wobei die Anordnung der kompletten Filtereinheit vor den Spindeln erfolgt.

Eine schaufenförmige Ausbildung des Filterbandes könnte auch so erfolgen, daß das Filterband die Spindeln umschließt.

Weiterhin ist es vorteilhaft, wenn das Trennelement als schlaufenförmiges in sich geschlossenes Filterband ausgebildet und über an beiden Enden der Maschine angeordnete Umlenkrollen geführt ist, da bei diesem, nach Art eines Trumms vorliegendem Aufbau eine Mehrfachverwendung aufgrund eines Umspulvorgangs möglich ist. Zudem bietet ein derartiges Trennelement den Vorteil, daß das schlaufenförmige Filterband die drehenden Teile umschließend angeordnet werden kann.

Vorzugsweise ist das Trennelement in bezug zu den drehenden Teilen in einer maschinenaußenseitigen Position angeordnet. Dies bedeutet, daß es zu einer gedachten, in den Drehachsen der Spindeln liegenden Ebene eine parallele Position einnimmt. Das hat den zusätzlichen Vorteil, daß die Übertragung von Fasermaterial, das sich von den rotierenden Spindeln abgelöst hat, von einer Maschine auf eine andere minimiert wird, was insbesondere dann von Bedeutung ist, wenn auf den Maschinen unterschiedliche Materialien verarbeitet werden. Wird auf einer Maschine beispielsweise Baumwollgarn gesponnen und wird auf der Nachbarmaschine Polyestergarn versponnen, so bewirkt die Übertragung des Fasermaterials von einer Maschine auf die andere, daß beispielsweise in das Baumwollgarn Polyesterfasern eingesponnen werden, was zu großen Problemen bei der Anfärbung des Baumwollgarns führt.

Es ist aber auch möglich, das Trennelement in bezug zu den drehenden Teilen in einer maschineninnenseitigen Position oder aber auf beiden Seiten der drehenden Teile anzuordnen, was den weiteren Vorteil mit sich bringt, daß auch diejenige Maschine weniger verschmutzt wird, an der die drehenden Teile angeordnet sind.

Eine weitere vorteilhafte Ausgestaltung einer lufttechnischen Einrichtung gemäß der Erfindung bei Maschinen mit mehreren reihenförmig angeordneten, drehenden Teilen ergibt sich, wenn diesen Teilen jeweils ein Trennelement zugeordnet ist. Hierbei ist es jedoch auch möglich, das sich ein Trennelement entlang der Reihe der drehenden Teile erstreckt.

Insbesondere ist für eine Wiederverwendung der Trennelemente eine Vorrichtung zu deren Reinigung vorgesehen, die als Saugdüse ausgebildet ist. Es können auch mehrere Saugdüsen eingesetzt werden. Zur Reinigung der Trennelemente ist es insbesondere erforderlich, daß eine Relativbewegung zwischen der Saugdüse und dem Trennelement vorliegt, um eine ganzflächige Säuberung vorzunehmen. Zu diesem Zweck ist es vorteilhaft, wenn bei beweglichen Trennelementen die Saugdüse stationär angeordnet ist, beziehungsweise wenn zur Reinigung eines stationären Trennelementes mindestens eine verfahrbar/verschiebbar angeordnete Saugdüse verwendet wurde.

Das Trennelement kann vorzugsweise aus filzartigem oder aus gewebtem Material bestehen. Wird dem Trennelement eine Vorrichtung zur elektrostatischen Aufladung zugeordnet, so wird bewirkt, daß die Luft von faserartigen Textilpartikeln noch besser gereinigt wird, weil durch die elektrostatischen Anziehungskräfte Partikel auf dem Trennelement noch besser haften bleiben.

Ferner betrifft die Erfindung eine Textilmaschine, die an mindestens einem Spindeltisch reihenförmig angeordnete Spindeln aufweist und der eine lufttechnische Einrichtung zugeordnet ist. Es ist vorgesehen, daß von dem Spindeltisch mindestens ein, die Spindeln seitlich abdeckendes, vorzugsweise senkrecht oder etwa senkrecht verlaufendes Trennelement ausgeht, das als Luftfilter ausgebildet ist.

Weiter Vorteile sind in den Unteransprüchen gekennzeichnet.

Die Erfindung wird im folgenden anhand einiger Figuren näher erläutert. Es zeigen:
- Figur 1: eine Stirnansicht einer Textilmaschine in Richtung der Pfeile I-I, in Figur 2 mit erfindungsgemäßem Trennelement,
- Figur 2: eine Seitenansicht der Textilmaschine,
- Figur 3,4: schematische Draufsichten auf Trennelemente, die in bezug zu drehenden Teilen der Textilmaschine seitlich zu diesen angeordnet sind und
- Figur 5: eine schematische Draufsicht auf ein Trennelement, das die drehenden Teile umschließt.

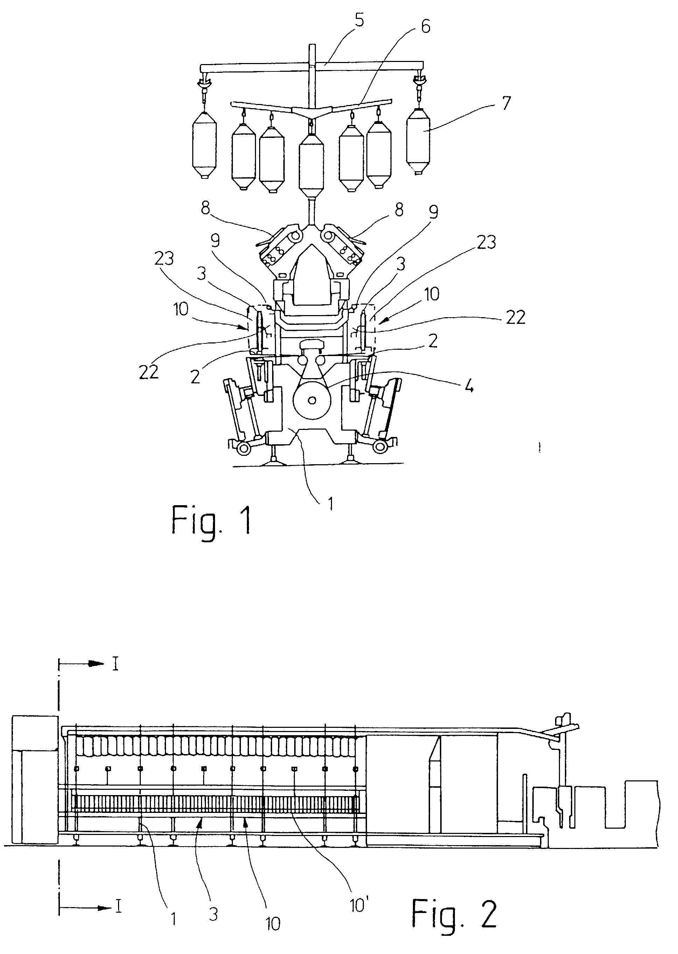

Die Figur 1 zeigt eine Textilmaschine, die ein Gestell 1 aufweist, das mit einer als Riemengetriebe 4 ausgebildeten Antriebsvorrichtung ausgestattet ist. An dem Gestell 1 sind beidseitig je ein Spindeltisch 2 angeordnet. Auf jedem Spindeltisch 2 befindet sich als drehende Teile reihenförmig angeordnete Spindeln 3, die sich in senkrechter Position befinden, wobei ihre freien Enden nach oben weisen. Von der Antriebsvorrichtung werden die Spindeln 3 mittels des Riemengetriebes 4 im Betrieb der Textilmaschine in Rotation versetzt. Dem Gestell 1 sind ferner Haltevorrichtungen 5 und 6 für vorgelegtes Fadenmaterial 7 zugeordnet und es ist ein Streckwerk 8 sowie eine Fadenzuführung 9 vorgesehen.

Schaut man in Längsrichtung der reihenförmig angeordneten Spindeln 3, so liegt neben der rechtsseitigen Spindel 3 in Figur 1 eine maschineninnenseitige Position 22 und eine maschinenaußenseitige Position 23 vor. Entsprechendes gilt für die linke Spindel 3 der Figur 1. Den Spindeln 3 jeder Spindelreihe ist erfindungsgemäß jeweils ein Trennelement 10 zugeordnet, das sich seitlich der Spindeln in vertikaler Position befindet und zwar in maschinenaußenseitiger Position 23. Die Anordnung ist so getroffen, daß sich das Trennelement 10 in einer Ebene befindet, die parallel verläuft zu einer gedachten Ebene, die durch die Drehachsen der Spindeln 3 verläuft. Die Trennelemente 10 sind in der Figur 1 gestrichelt eingezeichnet; sie bilden stationäre Trennwände, wobei ihre vertikalen Abmessungen im wesentlichen der Länge der Spindeln 3 entsprechen. Im Bereich der maschineninnenseitigen Positionen 22 ist es nicht erforderlich, Trennelemente 10 anzuordnen, da dort der Maschinenaufbau eine Abschirmung für die Spindeln 3 bildet. Oder es ist dort ebenfalls ein Trennelement 10 angeordnet (nicht dargestellt).

Erfindungsgemäß sind die Trennelemente 10 derart ausgestaltet, daß sie für einen Luftstrom teildurchlässig sind, wobei sie jedoch eine starke Dämpfungswirkung auf diesen Luftstrom ausüben. Ferner wirken sie als Luftfilter, daß heißt, Partikel, die in einem sie durchströmenden Luftstrom enthalten sind, werden ausgefiltert. Vorzugsweise weisen die Trennelemente 10 Gewebematerial oder Filzmaterial auf, um die genannten Wirkungen zu erzielen. Aufgrund der sich im Betrieb der Textilmaschine schnell drehenden Spindeln 3 wird ein sogenannter Spindelwind erzeugt, das heißt, es wird eine drallbehaftete Luftströmung auftreten. Dieser Spindelwind wird mittels des jeweiligen Trennelements 10 stark gedämpft, so daß bereits in geringem Abstand von der Textilmaschine nur noch ein sehr niedriges Geschwindigkeitsniveau vorliegt. Gleichzeitig wird -wie erwähnt- neben dieser Drosselwirkung der Effekt erzielt, daß vom Spindelwind transportierte Partikel, wie Fasern und dergleichen durch das jeweilige Trennelement 10 ausgefiltert werden, das heißt, das jeweilige Trennelement 10 fördert die Luftverbesserung und vermindert die Gefahr, daß diese Fasern in das Fadenmaterial gelangen. Die erfindungsgemäße Ausgestaltung hat beispielsweise in Räumen, in denen mehrere Textilmaschinen angeordnet sind den Vorteil, daß sich die zu einer Hauptströmungsrichtung addierenden Spindelwinde einer Maschine nicht mehr in den Maschinengängen derart stark ausbilden, daß sie störend auf das Bedienungspersonal wirken oder -sofern der Raum mit einer Klimaanlage oder dergleichen versehen ist- daß die Stärke der resultierenden Luftströmung Größenordnungen erreicht, die eine Belüftung des Raumes stören oder die Klimatisierung sogar unmöglich machen. Aufgrund der erfindungsgemäßen Trennelemente sind die Spindelwinde beziehungsweise ist die resultierende Hauptströmung derart abgeschwächt, daß die Produktion im wesentlichen zugfrei und ohne Störung einer vorhandenen Klimaanlage durchgeführt werden kann.

Die Figur 2 zeigt die Anordnung der Figur 1 in Seitenansicht. Es ist erkennbar, daß sich das jeweils als Trennwand 10' ausgebildete Trennelement 10 über die Länge der jeweiligen Textilmaschine erstreckt, wobei in maschinenaußenseitiger Position 23 die entsprechende Spindelreihe 3 seitlich abgedeckt ist. Die Länge der Trennwand 10' entspricht etwa der Länge der Textilmaschine, soweit es den Bereich betrifft, der die drehenden Teile, das heißt die Spindeln 3, aufweist.

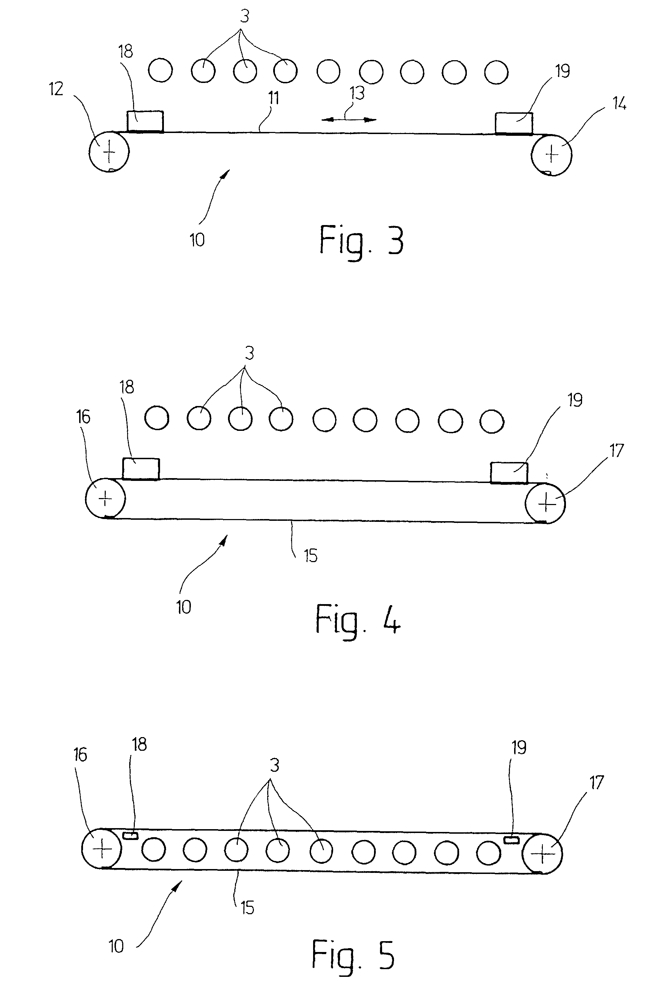

Die Figur 3 zeigt ein weiteres Ausführungsbeispiel eines erfindungsgemäßen Trennelements 10, das wiederum einer Textilmaschine zugeordnet ist, die eine Reihe von Spindeln 3 aufweist. Einzelheiten der Textilmaschine sind -der übersichtlichkeit halberin der Figur 3 sowie in den noch folgenden Figuren 4 und 5 nicht dargestellt. Im Hinblick auf die Abmessungen des Trennelments 10 im Ausführungsbeispiel der Figur 3 gilt das gleiche, wie zuvor zum Ausführungsbeispiel der Figuren 1 und 2 beschrieben. Unterschiedlich ist jedoch, daß es sich bei dem Ausführungsbeispiel der Figur 3 nicht um ein feststehendes, sondern um ein bewegbares Trennelement 10 handelt. Hierzu ist das Trennelement 10 der Figur 3 als Filterband 11 ausgebildet, das von einer Vorratsrolle 12 abwickelbar und in Richtung des Pfeiles 13 transportierbar ist, wobei es seitlich an den Spindeln 3 vorbeibewegt wird. Es erfolgt dabei ein Aufrollen auf eine Aufnahmerolle 14, das heißt, es wird dort aufgewickelt, dabei kann das Filterband durch eine/mehrere Absaugdüsen gereinigt werden.

Eine ökonomisch sinnvolle Bauform wird gemäß obiger Anmerkung das kontinuierlich laufende Band sein, dessen Laufrichtung umgeschaltet wird, wenn die aktuelle Vorratsrolle abgewickelt ist. Dabei wird das Band über eine oder mehrere stationäre Absaugdüsen kontinuierlich gereinigt.

Diese vorstehend beschiebene Bauform ist auch möglich, wenn ein Weiterspulen des Bandes nach wählbaren Parametern, zum Beispiel nach einer bestimmten Zeit, durchgeführt wird.

Die Ausführungsform der Figur 3 hat den Vorteil daß -je nach Bedarf- den Spindeln 3 stets ein Trennelement 10 in unbelastertem Zustand zugeordnet werden kann. Setzt sich das Trennelement 10 im Zuge des Betriebs zunehmend mit herausgefilterten Partikeln zu, so wird es durch Betätigung der Aufnahmerolle 14 ein Stückchen weiter transportiert und steht somit in gewünschter Form zur Verfügung. Auf diese Art und Weise ist es möglich, auch im Langzeitbetrieb etwa stabile Parameter einzustellen. Will man -nach einem vollständig abgespulten Filterband 11- eine Weiterverwendung vornehmen, so können dem Filterband 11 Absaugdüsen 18 und 19 einer nicht näher dargestellten Reinigungsvorrichtung zugeordnet sein, die die den Spindeln 3 zugeordnete Seite des Filterbands 11 absaugen. Hierzu kann entweder das gesamte Filterband 11 umgespult werden, wobei dann die Reinigung erfolgt. Alternativ ist es jedoch auch möglich, daß stets der jeweils anschließend verwendete Abschnitt des Filterbandes 11 mittels der entsprechenden Saugdüse 18 beziehungsweise 19 (je nach Spulrichtung 13) in Betrieb genommen wird. Die Spulrichtung 13 ergibt sich dadurch, daß nach einem vollständigen Umspulen die Aufnahmerolle 14 zur Vorratsrolle 12 und die Vorratsrolle 12 zur Aufnahmerolle 14 wird, das heißt, es ist möglich, das Band wieder in die Ursprungsposition zurückzuspulen. Selbstverständlich ist es beim Ausführungsbeispiel der Figur 3 auch möglich, daß nicht zwei Saugdüsen 18 und 19, sondern daß nur eine Saugdüse vorgesehen ist.

Die Figur 4 zeigt ein weiteres Ausführungsbeispiel, das sich von dem Ausführungsbeispiel der Figur 3 lediglich dadurch unterscheidet, daß nicht eine begrenzte Länge des Filterbandes 11 vorliegt, sondern daß dieses als schlaufenförmiges, in sich geschlossenes Filterband ausgebildet ist. Dieses schlaufenförmige Filterband 15 umschlingt im Bereich der beiden Enden der Textilmaschine angeordnete Umlenkrollen 16 und 17, wodurch es im "Endlosbetrieb" die bereits bei den vorstehenden Ausführungsbeispielen beschriebene Abschirmfunktion vornimmt. Von Besonderheit ist bei dieser Ausführungsform, daß eine Doppelabschirmung vorliegt, da ja sowohl das hinführende als auch das zurückführende Trumm jeweils für sich eine Abschirmfunktion ausübt. Entsprechend dem Ausführungsbeispiel der Figur 3 können auch hier Absaugdüsen 18 und 19 vorgesehen sein, die eine Reinigungsfunktion ausüben.

Schließlich zeigt das Ausführungsbeispiel der Figur 5 eine Anordnung eines Trennelments 10 derart, daß -wie im Ausführungsbeispiel der Figur 4- ein Endlos-Trumm vorgesehen ist (Filterband 15, Umlenkrollen 16 und 17), wobei sich jedoch die reihenförmig angeordneten Spindeln 3 im Innern der Schlaufe des Filterbandes 15 befinden. Hierdurch wird somit eine Rundumabschirmung der Spindeln 3 erzielt. Entsprechend den zuvor beschriebenen Ausführungsbeispielen ist es wiederum möglich, eine Saugdüse beziehungsweise 2 Saugdüsen 18, 19 vorzusehen, um -je nach Erfordernis- ein Absaugen von durch den Spulenwind transportierten Partikeln vornehmen zu können.

Aufgrund der Erfindung wird verhindert, daß die sich schnelldrehenden Spindeln mit hoher Geschwindigkeit Staub und Fasermaterial in den Raum beziehungsweise in den Maschinengang blasen. Die hoch turbulenten Strömungsverhältnisse im Gangbereich einer derartigen Textilmaschine werden aufgrund der Erfindung sehr stark beruhigt. Hierdurch ist verhindert, daß möglicherweise im Raum vorhandene Klimaanlagen in ihrer Effizienz gestört werden. Das Filtermaterial des erfindungsgemäßen Trennelements wird derart gewählt, daß seine Luftdurchlässigkeit auf die Intensität des Spindelwindes und auf die geforderte Abscheideleistung abgestimmt ist.

Die Erfindung ist selbstverständlich nicht auf die Anwendung bei einer Textilmaschine begrenzt, sondern kann bei jeglichen Maschinen, die drehende Teile aufweisen, Verwendung finde, beispielsweise ist es auch möglich, sie bei Spulenmaschinen, Zwirnmaschinen usw. einzusetzen.

Im Hinblick auf die Ausführungsformen mit Absaugdüsen ist es erforderlich, daß eine Relativbewegung von Absaugdüse und Filterelement durchgeführt wird. Die Ausführungsbeispiele zeigen feststehende Saugdüsen und sich bewegendes Filterband. Es ist selbstverständlich auch möglich, daß die Saugdüse beziehungsweise die Saugdüsen beweglich ausgestaltet sind und daß das Trennelement eine ortsfeste Position einnimmt. Schließlich besteht auch die Möglichkeit, daß sich sowohl das Trennelement als auch die Filterdüse beziehungsweise sich die Filterdüsen bewegen. Im Falle einer beweglichen Saugdüse ist eine geeignete Vorrichtung vorgesehen, die die Saugdüse entlang eines vorgegebenen Weges bewegt, wobei die entsprechene Fläche des Trennelements abgesaugt wird.

## Patentansprüche

1. Lufttechnische Einrichtung für eine Maschine mit mindestens einem drehenden Teil (3), insbesondere für eine Textilmaschine, mit mindestens einem, eine vom drehenden Teil (3) ausgehende Luftbewegung zumindest teilweise abschirmenden Trennelement (10), **dadurch gekennzeichnet,** daß das Trennelement (10) als Luftfilter ausgebildet ist.

2. Lufttechnische Einrichtung nach Anspruch 1, **dadurch gekennzeichnet,** daß das Trennelement (10) als stationäre Trennwand ausgebildet ist.

3. Lufttechnische Einrichtung nach einem der vorhergehenden Ansprüche, **dadurch gekennzeichnet,** daß das Trennelement (10) als Filterband (11) ausgebildet ist, das vor einer vorzugsweise an dem einen Ende der Maschine angeordneten Vorratsrolle (12) abwickelbar und auf einer vorzugsweise an dem anderen Ende der Maschine angeordneten Aufnahmerolle (14) aufwickelbar ist.

4. Lufttechnische Einrichtung nach einem der vorhergehenden Ansprüche, **dadurch gekennzeichnet,** daß das Trennelement (10) als schlaufenförmiges, in sich geschlossenes Filterband (15) ausgebildet und über vorzugsweise an beiden Enden der Maschine angeordnete Umlenkrollen (16, 17) geführt ist.

5. Lufttechnische Einrichtung nach Anspruch 4, **dadurch gekennzeichnet,** daß das schlaufenförmige Filterband (15) die drehenden Teile (3) umschließt.

6. Lufttechnische Einrichtung nach einem der vorhergehenden Ansprüche, **dadurch gekennzeichnet,** daß das Trennelement (10) in bezug zu den drehenden Teilen (3) in einer maschinenaußenseitigen Position (23) angeordnet ist.

7. Lufttechnische Einrichtung nach einem der vorhergehenden Ansprüche, **dadurch gekennzeichnet,** daß das Trennelement (10) in bezug zu den drehenden Teilen (3) in einer maschineninnenseitigen Position (22) angeordnet ist.

8. Lufttechnische Einrichtung nach einem der vorhergehenden Ansprüche, **dadurch gekennzeichnet,** daß auf beiden Seiten der drehenden Teile (3) Trennelemente (10) angeordnet sind.

9. Lufttechnische Einrichtung nach einem der vorhergehenden Ansprüchen, **gekennzeichnet durch** mehrere reihenförmig angeordnete drehende Teile (3), denen einzeln jeweils ein Trennelement (10) oder denen ein sich entlang der Reihe der drehenden Teile erstreckendes Trennelement (10) zugeordnet ist.

10. Lufttechnische Einrichtung nach einem der vorhergehenden Ansprüche, **dadurch gekennzeichnet,** daß eine Vorrichtung (18, 19) zur Reinigung der Trennelemente (10) vorgesehen ist.

11. Lufttechnische Einrichtung nach einem der vorhergehenden Ansprüche, **dadurch gekennzeichnet**, daß die Reinigungsvorrichtung eine mit dem Trennelement (10) zusammenwirkende Saugdüse aufweist.

12. Lufttechnische Einrichtung nach einem der vorhergehenden Ansprüche, **dadurch gekennzeichnet,** daß die Reinigungsvorrichtung mehrere, mit dem Trennelement (10) zusammenwirkende Saugdüsen (18, 19) aufweist.

13. Lufttechnische Einrichtung nach einem der vorhergehenden Ansprüche, **dadurch gekennzeichnet,** daß die mindesten eine Saugdüse (18, 19) stationär den beweglich angeordneten Trennelementen (10) zugeordnet ist.

14. Lufttechnische Einrichtung nach einem der Ansprüche 1 bis 12, **dadurch gekennzeichnet**, daß mindestens eine Saugdüse (18, 19) entlang dem vorzugsweise stationären Trennelement (10) verschiebbar angeordnet ist.

15. Lufftechnische Einrichtung nach einem der vorhergehenden Ansprüche, **dadurch gekennzeichnet,** daß das Trennelement (10), beziehungsweise die Trennelemente (10) filzartiges oder gewebtes Material aufweisen.

16. Lufttechnische Einrichtung nach einem der vorhergehenden Ansprüche, **dadurch gekennzeichnet,** daß eine Vorrichtung zur elektrostatischen Aufladung des Trennelements (10), beziehungsweise der Trennelemente (10) vorgesehen ist.

17. Textilmaschine, die an mindestens einem Spindeltisch (2) reihenförmig angeordnete Spindeln (3) aufweist und der eine lufttechnische Einrichtung zugeordnet ist, insbesondere nach einem oder mehreren der vorhergehenden Ansprüche, **dadurch gekennzeichnet,** daß von dem Spindeltisch (2) mindestens ein, die Spindeln (3) seitlich abdeckendes, vorzugsweise senkrecht oder etwa senkrecht verlaufendes Trennelement (10) ausgeht, das als Luftfilter ausgebildet ist.

18. Textilmaschine nach einem der vorhergehenden Ansprüche, **dadurch gekennzeichnet,** daß sich das entlang der Spindelreihe verlaufende, vorzugsweise senkrecht stehende Trennelement (10) etwa bis zum oberen Ende der Spindeln (3) oder darüber hinaus erstreckt.

19. Textilmaschine nach einem der vorhergehenden Ansprüche, **dadurch gekennzeichnet,** daß die Spindeln (3) maschineninnenseitig seitlich von Bauelementen der Textilmaschine und maschinenaußenseitig seitlich von dem ein Bauteil der Textilmaschine bildenden Trennelement (10) abgeschirmt sind.

20. Textilmaschine nach einem der vorhergehenden Ansprüche, **dadurch gekennzeichnet,** daß das schlaufenförmige, vorzugsweise antreibbare Filterband (15) durch sein hin- und rückläufiges Trum doppellagig die Spindeln (3) seitlich abschirmt.

21. Textilmaschine nach einem der vorhergehenden Ansprüche, **dadurch gekennzeichnet,** daß das schlaufenförmige, vorzugsweise antreibbare Filterband (15) derart die beiden, je eine an einer der beiden Maschinenseiten angeordneten Spindelreihen seitlich umschließt, daß beide Spindelreihen maschinenaußenseitig abgeschirmt sind.

22. Textilmaschine nach einem der vorhergehenden Ansprüche, **dadurch gekennzeichnet**, daß das Filterband (15), mitsamt seiner Halteelemente beziehungsweise Antreib- und/oder Umlenkelemente höhenverlagerbar ist, derart, daß es so weit herunterfahrbar ist, daß die Spindeln (3) für einen seitlichen Zugriff einer Bedienperson zugänglich werden beziehungsweise derart nach oben verfahrbar ist, daß ebenfalls die Spindeln (3) für den seitlichen Zugriff einer Bedienperson freigegeben werden.

23. Textilmaschine nach einem der vorhergehenden Ansprüche, **dadurch gekennzeichnet,** daß das schlaufenförmige, in sich geschlossene Filterband (15) mittels der Umlenkrollen in Richtung der Längserstreckung der Spindelreihe horizontal verfahrbar ist.

24. Textilmaschine nach einem der vorhergehenden Ansprüche, **dadurch gekennzeichnet,** daß die Unterkante des Filterbandes (15) an den Spindeltisch (2) angrenzt und daß sich die Oberkante des Filterbandes bis in den Bereich des oberen Endes der Spindeln (3) oder darüber hinaus erstreckt.

## Claims

1. Ventilation apparatus for a machine having at least one rotating part (3), in particular for a textile machine, comprising at least one separating member (10) at least partly shielding an air flow issuing from the rotating part (3), characterised in that the separating member (10) is formed as an air filter.

2. Ventilation apparatus according to claim 1, characterised in that the separating member (10) is formed as a fixed partition.

3. Ventilation apparatus according to either one of the preceding claims, characterised in that the separating member (10) is formed as a filter belt (11) which can be unwound from a supply reel (12) preferably arranged at one end of the machine and wound onto a take-up reel (14) preferably arranged at the other end of the machine.

4. Ventilation apparatus according to any one of the preceding claims, characterised in that the separating member (10) is formed as an endless looped filter belt (15) and is guided over deflection rollers (16, 17) preferably arranged at both ends of the machine.

5. Ventilation apparatus according to claim 4, characterised in that the looped filter belt (15) surrounds the rotating parts (3).

6. Ventilation apparatus according to any one of the preceding claims, characterised in that the separating member (10) is arranged on the outside (23) of the machine relative to the rotating parts (3).

7. Ventilation apparatus according to any one of the preceding claims, characterised in that the separating member (10) is arranged on the inside (22) of the machine relative to the rotating parts (3).

8. Ventilation apparatus according to any one of the preceding claims, characterised in that separating members (10) are arranged on both sides of the rotating parts (3).

9. Ventilation apparatus according to any one of the preceding claims, characterised by a plurality of rotating parts (3) arranged in a row, with each of which a separating member (10) is individually associated or with which a separating member (10) extending along the row of rotating parts is associated.

10. Ventilation apparatus according to any one of the preceding claims, characterised in that a device (18, 19) for cleaning the separating members (10) is provided.

11. Ventilation apparatus according to any one of the preceding claims, characterised in that the cleaning device has a suction nozzle co-operating with the separating member (10).

12. Ventilation apparatus according to any one of the preceding claims, characterised in that the cleaning device has a plurality of suction nozzles (18, 19) co-operating with the separating member (10).

13. Ventilation apparatus according to any one of the preceding claims, characterised in that the at least one suction nozzle (18, 19) is associated in a fixed manner with the movably arranged separating members (10).

14. Ventilation apparatus according to any one of claims 1 to 12, characterised in that at least one suction nozzle (18, 19) is arranged so as to be displaceable along the preferably fixed separating member (10).

15. Ventilation apparatus according to any one of the preceding claims, characterised in that the separating member (10) or separating members (10) comprise felt-like or woven material.

16. Ventilation apparatus according to any one of the preceding claims, characterised in that a device for electrostatically charging the separating member (10) or separating members (10) is provided.

17. A textile machine having spindles (3) arranged in rows on at least one spindle table (2) and with which ventilation apparatus is associated, in particular according to one or more of the preceding claims, characterised in that at least one separating member (10), laterally covering the spindles (3) and preferably extending vertically or substantially vertically, projects from the spindle table (2) and is formed as an air filter.

18. A textile machine according to any one of the preceding claims, characterised in that the preferably vertically extending separating member (10) extending along the row of spindles extends substantially as far as the upper end of the spindles (3) or therebeyond.

19. A textile machine according to any one of the preceding claims, characterised in that the spindles (3) are laterally shielded by structural elements of the textile machine on the inside thereof and are laterally shielded by the separating member (10), forming a component of the textile machine, on the outside thereof.

20. A textile machine according to any one of the preceding claims, characterised in that the looped, preferably drivable filter belt (15) laterally shields the spindles (3) in a double-layered manner with its side moving back and forth.

21. A textile machine according to any one of the preceding claims, characterised in that the looped, preferably drivable filter belt (15) laterally surrounds the two rows of spindles arranged on either side of the machine in such a manner that both rows of spindles are shielded on the outside of the machine.

22. A textile machine according to any one of the preceding claims, characterised in that the filter belt (15), together with its retaining members and drive and/or deflection members, is vertically displaceable in such a manner that it is movable downwards far enough for the spindles (3) to be laterally accessible by an operator or is movable upwards so that the spindles (3) are likewise released for lateral access by an operator.

23. A textile machine according to any one of the preceding claims, characterised in that the endless looped filter belt (15) is horizontally movable along the longitudinal extent of the row of spindles by means of the deflection rollers.

24. A textile machine according to any one of the preceding claims, characterised in that the lower edge of the filter belt (15) is adjacent to the spindle table (2) and in that the upper edge of the filter belt extends as far as the region of the upper end of the spindles (3) or therebeyond.

## Revendications

1. Appareil de ventilation pour une machine, avec au moins une pièce rotative (3), notamment pour une machine textile, avec au moins un élément de séparation (10) protégeant au moins en partie contre un mouvement d'air provenant de la pièce rotative (3), **caractérisé en ce que** l'élément de séparation (10) est formé comme filtre à air.

2. Appareil de ventilation selon la revendication 1, **caractérisé en ce que** l'élément de séparation (10) est formé comme paroi de séparation stationnaire.

3. Appareil de ventilation selon l'une des revendications précédentes, **caractérisé en ce que** l'élément de séparation (10) est formé comme bande de filtrage (11) pouvant être déroulée d'une bobine de réserve (12) placée de préférence à une extrémité de la machine et pouvant être enroulée sur une bobine de réception (14) placée à l'autre extrémité de la machine.

4. Appareil de ventilation selon l'une des revendications précédentes, **caractérisé en ce que** l'élément de séparation (10) est formé comme bande de filtrage (15) en forme de boucle et fermée en soi et qu'il est guidé au moyen de poulies de renvoi (16, 17) disposées de préférence aux deux extrémités de la machine.

5. Appareil de ventilation selon la revendication 4, **caractérisé en ce que** la bande de filtrage (15) en forme de boucle entoure les pièces rotatives (3).

6. Appareil de ventilation selon l'une des revendications précédentes, **caractérisé en ce que** l'élément de séparation (10) est placé dans une position (23) extérieure à la machine par rapport aux pièces rotatives (3).

7. Appareil de ventilation selon l'une des revendications précédentes, **caractérisé en ce que** l'élément de séparation (10) est placé dans une position (22) intérieure à la machine par rapport aux pièces rotatives (3).

8. Appareil de ventilation selon l'une des revendications précédentes, **caractérisé en ce que** des éléments de séparation (10) sont disposés des deux côtés des pièces rotatives (3).

9. Appareil de ventilation selon l'une des revendications précédentes, **caractérisé par** plusieurs pièces rotatives (3) disposées en rangées, un élément de séparation (10) étant respectivement attribué à une pièce individuelle ou un élément de séparation (10) s'étendant le long des rangées des pièces rotatives étant attribué aux pièces rotatives.

10. Appareil de ventilation selon l'une des revendications précédentes, **caractérisé en ce** qu'un dispositif (18, 19) est prévu pour le nettoyage des éléments de séparation (10).

11. Appareil de ventilation selon l'une des revendications précédentes, **caractérisé en ce que** le dispositif de nettoyage présente une buse d'aspiration agissant avec l'élément de séparation (10).

12. Appareil de ventilation selon l'une des revendications précédentes, **caractérisé en ce que** le dispositif de nettoyage présente plusieurs buses d'aspiration (18, 19) agissant avec l'élément de séparation (10).

13. Appareil de ventilation selon l'une des revendications précédentes, caractérisé en ce qu'au moins une buse d'aspiration (18, 19) est attribuée de manière stationnaire aux éléments de séparation (10) disposés de manière mobile.

14. Appareil de ventilation selon l'une des revendications 1 à 12, **caractérisé en ce** qu'au moins une buse d'aspiration (18, 19) est placée de manière déplaçable le long de l'élément de séparation (10) de préférence stationnaire.

15. Appareil de ventilation selon l'une des revendications précédentes, **caractérisé en ce que** l'élément de séparation (10) ou les éléments de séparation (10) présente(nt) un matériau feutré ou tissé.

16. Appareil de ventilation selon l'une des revendications précédentes, **caractérisé en ce** qu'un dispositif est prévu pour la charge électrostatique de l'élément de séparation (10) ou des éléments de séparation (10).

17. Machine textile présentant des broches (3) disposées en rangées au moins sur une table à broches (2) et à laquelle est attribué un appareil de ventilation, en particulier selon l'une ou plusieurs des revendications précédentes, **caracterisée en ce** qu'au moins un élément de séparation (10) recouvrant les broches (3) latéralement et s'étendant de préférence verticalement ou à peu près verticalement part de la table à broches (2), cet élément de séparation (10) étant formé comme filtre à air.

18. Machine textile selon l'une des revendications précédentes, **caractérisée en ce que** l'élément de séparation (10) passant le long de la rangée de broches, de préférence verticalement, s'étend environ jusqu'à l'extrémité supérieure des broches (3) ou va au-delà.

19. Machine textile selon l'une des revendications précédentes, **caractérisée en ce que** les broches (3), à l'intérieur de la machine, sont protégées latéralement à l'égard des éléments de construction de la machine textile et, à l'extérieur de la machine, latéralement à l'égard de l'élément de séparation (10) formant une pièce de la machine textile.

20. Machine textile selon l'une des revendications précédentes, **caractérisée en ce que** la bande de filtrage (15) en forme de boucle et de préférence entraînable, protège les broches (3) latéralement sous forme de deux couches par son brin allant en va-et-vient.

21. Machine textile selon l'une des revendications précédentes, **caractérisée en ce que** la bande de filtrage (15) en forme de boucle et de préférence entraînable, entoure latéralement les deux rangées de broches disposées chacune sur l'un des côtés de la machine de telle manière que les deux rangées de broches sont protégées à l'extérieur de la machine.

22. Machine textile selon l'une des revendications précédentes, **caractérisée en ce que** la bande de filtrage (15), y compris ses éléments de support et ses éléments d'entraînement et/ou de renvoi, peut être déplacée en hauteur de manière à pouvoir être tellement abaissée que les broches (3) deviennent accessibles à une personne de service pour un accès latéral ou tellement déplacée vers le haut que les broches (3) sont également libérées pour l'accès latéral par une personne de service.

23. Machine textile selon l'une des revendications précédentes, **caractérisée en ce que** la bande de filtrage (15) en forme de boucle et fermée en soi peut être déplacée horizontalement en direction de l'étendue longitudinale des rangées de broches au moyen des poulies de renvoi.

24. Machine textile selon l'une des revendications précédentes, **caractérisée en ce que** le bord inférieur de la bande de filtrage (15) est adjacent à la table à broches (2) et que le bord supérieur de la bande de filtrage s'étend jusqu'à la partie de l'extrémité supérieure des broches (3) ou va au-delà.
